# EUROPÄISCHE PATENTANMELDUNG

(11) **EP 2 786 824 A2**
(43) Veröffentlichungstag der Anmeldung: **08.10.2014**
(21) Anmeldenummer: 14154332.2
(22) Anmeldetag: 07.02.2014
(51) Int. Cl.: B23F 23/00, B23F 19/10

(54) **Vorrichtung und Verfahren zum Anfasen eines Werkstücks**

(30) Priorität: 28.03.2013 DE 102013005559; 13.09.2013 DE 102013015240
(71) Anmelder: LIEBHERR-VERZAHNTECHNIK GmbH, 87437 Kempten (DE)
(72) Erfinder: Geiser, Dr. Hansjörg, 87487 Wiggensbach (DE); Winkel, Dr. Oliver, 87435 Kempten (DE); Heidemann, Andreas, 87439 Kempten (DE)
(74) Vertreter: Laufhütte, Dieter

(57) **Zusammenfassung**

1. Vorrichtung (1) zum Anfasen eines verzahnten Werkstücks (2) mit wenigstens einer drehbar gelagerten Werkstückspindel (3) und mit wenigstens einer Bearbeitungseinheit (4) mit mindestens einem Bearbeitungskopf (17) zum Anfasen eines in in Spindel (6) eingespannten Werkstücks (2), wobei die Bearbeitungseinheit (4) mit mindestens einem Bearbeitungskopf (17) ausschließlich Anfasfräser, die ein Bearbeiten des Werkstücks (2) an zwei unterschiedlichen Seiten des Werkstücks (2) zulassen, insbesondere Chamfer-Cut-Fräser (5, 5'), umfasst und dass die Bearbeitungseinheit (4) mit mindestens einem Bearbeitungskopf (17) eine Vorrichtung zum von Anfasfräsern und/oder zum Einmitten von Anfasfräsern relativ zur Lage der Verzahnung auf dem Werkstück (2) umfasst.

## Beschreibung

Die vorliegende Erfindung betrifft eine Vorrichtung und ein Verfahren zum Anfasen eines außen- und/oder innenverzahnten Werkstücks.

Vorrichtungen zum Anfasen von Werkstücken sind zum Beispiel bei Verzahnungsfräsmaschinen bekannt und haben zur Aufgabe, die beim Verzahnungsfräsvorgang entstehenden scharfkantigen Ränder oder Grate an den Stirnseiten durch Anfasen zu entfernen.

Üblicherweise umfasst das dabei verwendete Werkzeug einen Werkzeugdorn auf dem sowohl ein oder mehrere Fräser zur Herstellung der Verzahnung als auch mindestens ein Anfasfräser zum Anfasen wenigstens einer der erzeugten Zahnkanten montiert sind.

Es ist dabei nicht möglich, die Fräs- und Anfasfräsbearbeitung unabhängig voneinander anzusteuern, wodurch immer nur entweder eine Fräs- oder eine Anfasfräsbearbeitung des Werkstücks durchführbar ist.

Problematisch ist hierbei, dass es durch diese Bearbeitung zu einer Verlängerung der Bearbeitungszeit für das Werkstück kommt, da der Anfasprozess im Anschluss an den Fräsprozess stattfinden muss.

Aufgabe der vorliegenden Erfindung ist es daher, eine Vorrichtung zum Anfasen eines Werkstücks in vorteilhafter Weise weiterzubilden, insbesondere dahingehend, dass die Gesamtzeit für den Zahnradbearbeitungprozess durch den Anfasprozess nicht verlängert wird, und ein Anfasprozess zwischen zwei Fräsprozessen oder einem Schruppprozess und einem Schlichtprozess zum Einsatz kommen kann.

Weiterhin ist es Aufgabe der vorliegenden Erfindung, den Anfasprozess nicht nur mit einem Verzahnungsfräsprozess zu koppeln, sondern diese Art der Anfasung mit weiteren Verzahnungserzeugenden oder -bearbeitenden Prozessen, wie z. B. Stoßen von Verzahnungen oder Verzahnungsschaben, kombinierbar zu machen, bei denen kein Werkzeugdorn zur Aufnahme eines Anfasfräsers vorhanden ist.

Diese Aufgabe wird erfindungsgemäß durch eine Vorrichtung mit den Merkmalen des Anspruchs 1 gelöst, wonach eine Vorrichtung zum Anfasen eines verzahnten Werkstücks vorgesehen ist, mit wenigstens einer drehbar gelagerten Werkstückspindel und mit wenigstens einer Bearbeitungseinheit mit mindestens einem Bearbeitungskopf zum Anfasen eines in einer Spindel eingespannten Werkstücks, wobei die Bearbeitungseinheit mit mindestens einem Bearbeitungskopf ausschließlich Anfasfräser, die ein Bearbeiten des Werkstücks an zwei unterschiedlichen Seiten des Werkstücks zulassen, insbesondere Chamfer-Cut-Fräser, umfasst.

Da das Werkstück von einer Einheit oder einem Werkstücktisch einer vorherigen Bearbeitung, insbesondere dem Wälzfräsen, der hier beschriebenen getrennten weiteren Vorrichtung zugeführt wird, ist es notwendig, dass die Bearbeitungseinheit mit mindestens einem Bearbeitungskopf eine Vorrichtung zum Einfädeln von Anfasfräsern und/oder zum Einmitten von Anfasfräsern relativ zur Lage der Verzahnung auf dem Werkstück umfasst. Bei der Übergabe des Werkstückes von der vorherigen Bearbeitung auf die Vorrichtung zum Anfasen gehen nämlich die Informationen bezüglich Zahnlücke und Zahnmitte verloren und eine weitere Bearbeitung ohne ein erneutes Justieren wäre nicht möglich.

Eine derart ausgestaltete Vorrichtung ermöglicht es vorteilhafterweise, eine separate Anfasfräsbearbeitung an einem Werkstück vorzunehmen, ohne dass dabei Pausen bei der Anfasfräsbearbeitung aufgrund eines anderen Bearbeitungsschritts eingelegt werden müssen, der ebenfalls von der Bearbeitungseinheit ausgeführt wird. Dabei wird ermöglicht, das Anfasen gleichzeitig an zwei unterschiedlichen Seiten des Werkstücks durchzuführen, wodurch vorteilhafterweise die Bearbeitungszeit des Werkstücks verringert wird. Auch wird es ermöglicht, alternativ entweder saubere, das heißt von Mikrograten freie Stirnkanten oder saubere Flankenkanten herzustellen.

Erfolgt beispielsweise bei der ersten Bearbeitung ein Wälzfräsen und besteht das Anfasen aus einem Chamfern mit entsprechenden Chamfer Cut Fräsern, besteht genügend Zeit, parallel zum Wälzfräsen vor dem eigentlichen Chamfern einzumitten und einzufädeln, da der Bearbeitungsschritt des Chamferns wesentlich kürzer ist als der Wälzfräsvorgang.

Das Einfädeln bezeichnet dabei das Auffinden der Zahnlücke beim Werkstück in Bezug auf den Zahn des Werkzeugs, d.h. das Auffinden der Anfangsposition. Das Einmitten bezeichnet das genaue Positionieren des Werkzeugs in der Zahnlücke. Dies kann beispielsweise über einen sogenannten C-Achsen-Offset erfolgen, d.h. die gleichmäßige Wälzkopplung von Werkstück und Werkzeug wird kurzzeitig unterbrochen und durch ein Verlangsamen und Beschleunigen jeweilig einer Drehachse wird das Werkzeug passend zum Werkstück positioniert, bevor die Wälzkopplung wieder geschlossen wird , um mit dem Bearbeitungsprozess des Anfasens beispielsweise durch Chamfern beginnen zu können. Hierbei laufen beide Bearbeitungsprozesse mit der gleichen Regelgüte, d.h. mit der gleichen Qualität beim gleichen Rundlauf (Wälzkopplung).

Hierdurch wird das Einstellen der Bearbeitungseinheit vorteilhaft vereinfacht bzw. wenigstens teilweise automatisiert.

In einem bevorzugten Ausführungsbeispiel ist es denkbar, dass die Bearbeitungseinheit mit mindestens einem Bearbeitungskopf wenigstens zwei separat ansteuerbare Anfasfräser, insbesondere Chamfer-Cut-Fräser, umfasst, wobei vorzugsweise getrennte Antriebe, insbesondere gesondert ansteuerbare Antriebe, vorgesehen sind.

Eine derartige Aufteilung der Bearbeitungseinheit in wenigstens zwei getrennte Anfasfräser, insbesondere Chamfer-Cut-Fräser, ermöglicht es, mittels der Bearbeitungseinheit mit mindestens einem Bearbeitungskopf das Werkstück parallel an mehr als einem Bearbeitungspunkt oder auch mehrere Werkstücke parallel zu bearbeiten. Hierdurch wird die Bearbeitungszeit vorteilhaft verkürzt.

In einem weiteren bevorzugten Ausführungsbeispiel ist es denkbar, dass die Vorrichtung hängend angeordnet ist.

Im Gegensatz zu einer stehenden Anordnung einer Bearbeitungseinheit mit mindestens einem Bearbeitungskopf kann so vermieden werden, dass die während des Bearbeitungsvorgangs anfallenden Späne in eine im Bodenbereich der Bearbeitungseinheit verlaufende Kinematik eindringen und die Bewegungsfreiheit der Bearbeitungseinheit beeinträchtigen.

In einem bevorzugten Ausführungsbeispiel ist es auch denkbar, dass die Vorrichtung innerhalb einer Verzahnmaschine angeordnet ist.

In einem weiteren bevorzugten Ausführungsbeispiel ist es darüber hinaus denkbar, dass die Vorrichtung als eine eigenständige Anfasmaschine zum Anfasen von verzahnten Werkstücken ausgebildet ist. Diese kann z.B. durch eine Automation mit einer nebenstehenden Verzahnmaschine gekoppelt werden und so ein möglichst hoher Automatisierungsgrad des Bearbeitungsprozesses gewährleistet werden. Auch eine Ausführung als eine eigenständige Entgratzelle wäre im Rahmen der Erfindung möglich.

In einem bevorzugten Ausführungsbeispiel ist es denkbar, dass die Vorrichtung über eine Transportvorrichtung mit einer nebenstehenden Verzahnmaschine gekoppelt ist.

In einem weiteren bevorzugten Ausführungsbeispiel ist es denkbar, dass die Vorrichtung innerhalb eines verzahnten Werkstücks zum Anfasen von Innenverzahnungen angeordnet ist, und/oder dass die Vorrichtung einen automatischen Werkzeugwechsler umfasst.

Dabei kann die Vorrichtung bei größeren Innenverzahnungen innerhalb des verzahnten Werkstückes auf einer feststehenden Konsole im Zentrum des Maschinentisches oder einem Support über dem Maschinentisch angeordnet sein und so der Anfasbearbeitung von Innenverzahnungen dienen.

Die Erfindung richtet sich ferner auf ein Verfahren zum Anfasen eines Werkstücks mittels einer Vorrichtung nach einem der Ansprüche 1 bis 7, mit den entsprechenden, in Bezug auf die Vorrichtung genannten, Vorteilen.

In einem bevorzugten Ausführungsbeispiel ist es denkbar, dass das Anfasen zwischen mindestens zwei Frässchnitten und/oder zwischen mindestens einem Schruppschnitt und mindestens einem Schlichtschnitt durchgeführt wird.

Bei den Frässchnitten kann es sich dabei beispielsweise auch um Schruppschnitte handeln.

In einer Ausführung der Bearbeitungseinheit, insbesondere der Chamfer Cut Fräser, in der Verzahnmaschine werden unterschiedliche Ausführungen von Werkstücktischen benötigt. Da beim Wälzfräsen größere Leistungen erforderlich sind, benötigt der entsprechende Werkstücktisch einen stärkeren Antriebsmotor mit höheren Drehmomenten als der Werkstücktisch für die Bearbeitungseinheit zum Anfasen. Der Werkstücktisch zum Anfasen kann daher in vorteilhafter Weise kleiner ausgeführt sein, wobei er nur einen vergleichsweise leistungsschwächeren Motor sowie eine Steuerung mit einem kleineren Leistungsmodul tragen muss.

Weitere Einzelheiten und Vorteile der Erfindung werden nun anhand von in den Figuren dargestellten Ausführungsbeispielen näher erläutert. Es zeigen:
- Figur 1:: Vorrichtung mit einem Chamfer-Cut-Fräser;
- Figur 2:: Vorrichtung mit zwei Chamfer-Cut-Fräsern;
- Figur 3:: hängende Anordnung der Vorrichtung;
- Figur 4a-c:: schematische Darstellung der Bearbeitung des Werkstücks an zwei unterschiedlichen Seiten des Werkstücks;
- Figur 5:: Bearbeitungseinheit mit Einfädelsensor; und
- Figur 6:: Vorrichtung mit Grobentgratscheibe.

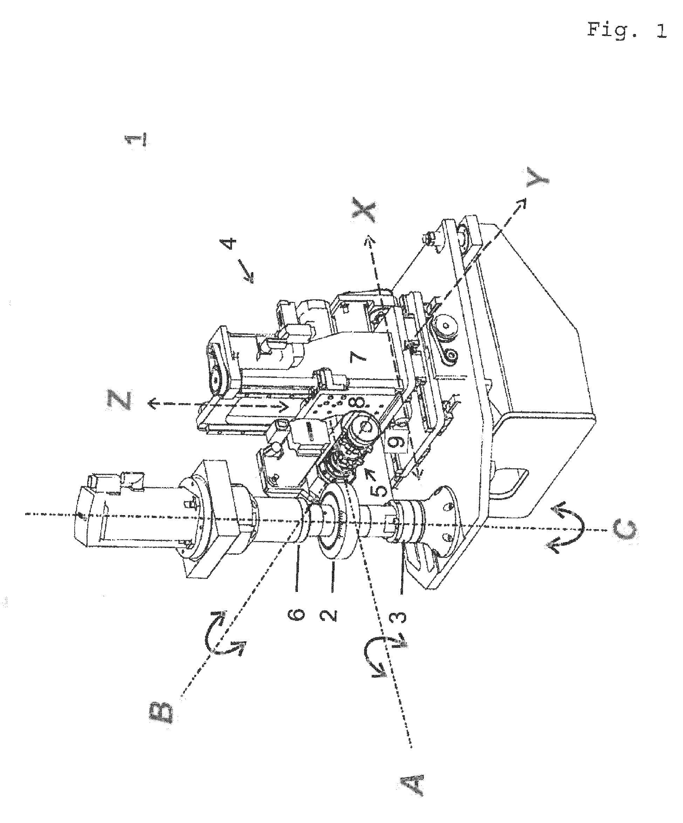

Das in Figur 1 dargestellte Ausführungsbeispiel zeigt eine Vorrichtung 1 zum Anfasen eines Werkstücks 2, wobei es sich bei dem Werkstück 2 beispielsweise um ein Zahnrad handeln kann. Das Werkstück 2 ist dabei drehbar um eine Achse C auf einer Werkstückspindel 3 gelagert.

Eine Bearbeitungseinheit 4 umfasst im gezeigten Ausführungsbeispiel einen Bearbeitungskopf 17 mit zwei miteinander gekoppelten Chamfer-Cut-Fräsern 5. Die Werkstückspindel 3 weist zur Drehung des Werkstücks 2 eine Spindel 6 auf.

Die gekoppelten Chamfer-Cut-Fräser 5 sind im gezeigten Ausführungsbeispiel um zwei Achsen A, B an der Bearbeitungseinheit 4 drehbar gelagert. Die gesamte Bearbeitungseinheit 4 ist dazu ausgelegt, die gekoppelten Chamfer-Cut-Fräser 5 entlang der Linearachsen X, Y und Z zu verfahren. Hierfür sind an der Bearbeitungseinheit 4 entsprechende Verfahrschlitten 7, 8 und 9 angeordnet.

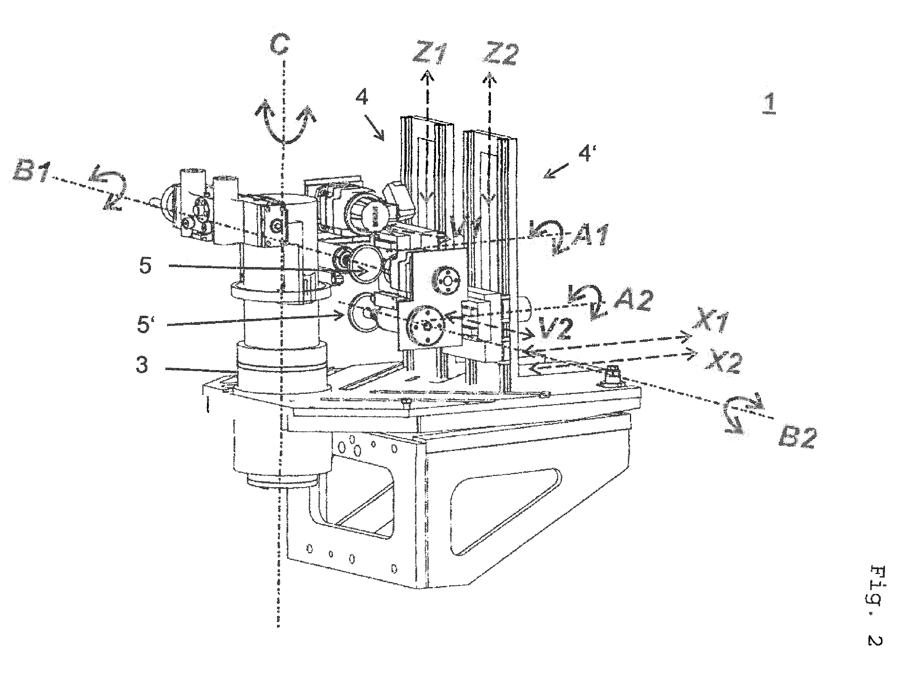

Das in Figur 2 dargestellte Ausführungsbeispiel weist zwei Bearbeitungsköpfe (17, 17') auf mit zwei unabhängig voneinander ansteuerbaren Chamfer-Cut-Fräsern 5, 5' auf, die unabhängig voneinander an den Bearbeitungseinheiten 4 und 4' vorgesehen sind.
Mit Ausnahme der unverändert gebliebenen Werkstückdrehachse C verdoppelt sich somit die Anzahl der Freiheitsgrade (A1, A2, B1, B2, X1, X2, V1, V2, Z1, Z2) der Vorrichtung 1 der Figur 2. Die beiden Chamfer-Cut-Fräser 5, 5' im Ausführungsbeispiel der Figur 2 können durch die unabhängige Lagerung so angesteuert werden, dass sie gleichzeitig an unterschiedlichen Bearbeitungspunkten eines und desselben Werkstücks 2 angreifen und dieses somit parallel bearbeiten. In alternativen Ausführungsformen ist ebenfalls denkbar, dass die beiden Chamfer-Cut-Fräser 5, 5' parallel an unterschiedlichen übereinander oder nebeneinander angeordneten Verzahnungen auf einem oder mehreren Werkstücken 2 angreifen, wie es z.B. bei Wellen mit mehreren Verzahnungen vorkommen kann oder bei einer Mehrfachspannung.

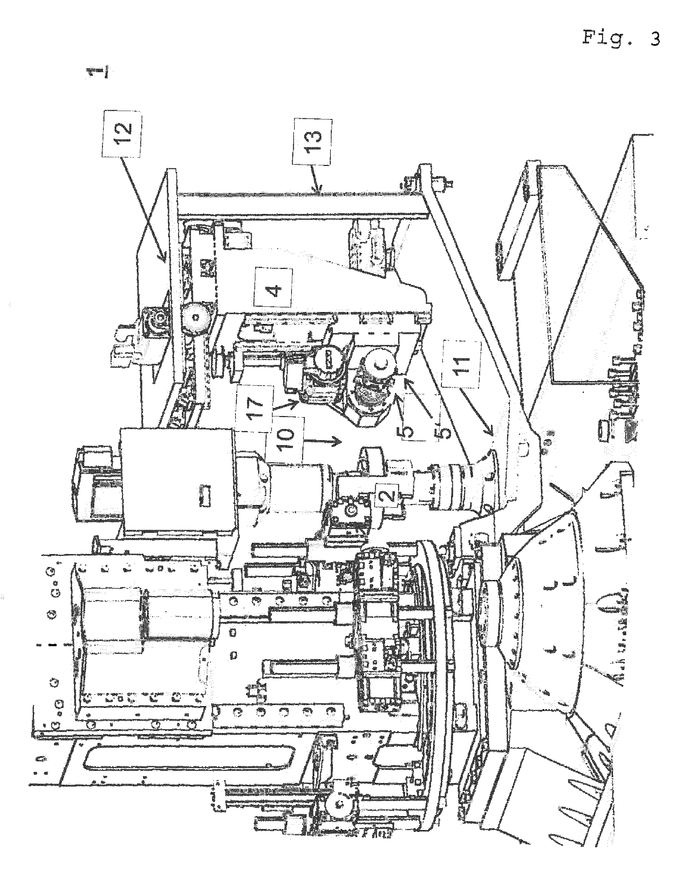

Das in Figur 3 dargestellte Ausführungsbeispiel zeigt eine Ausführungsform, in der eine Vorrichtung 1 mit einem Bearbeitungskopf 17 und zwei gekoppelt gelagerten Chamfer-Cut-Fräsern 5, 5' hängend angeordnet ist. Dabei ist eine Haltevorrichtung 13 in einem vom Werkstück 2 entfernten Bereich vorgesehen, an der die Bearbeitungseinheit 4 hängend angebracht ist. Die bei der Bearbeitung im Bereich 10 anfallenden Späne, die nach Trennung vom Werkstück 2 in den Bereich 11 fallen können somit nicht mit der Kinematik der Bearbeitungseinheit 4 in Konflikt geraten, die in einem über dem Bereich 11 angeordneten Kinematikbereich 12 vorgesehen ist.

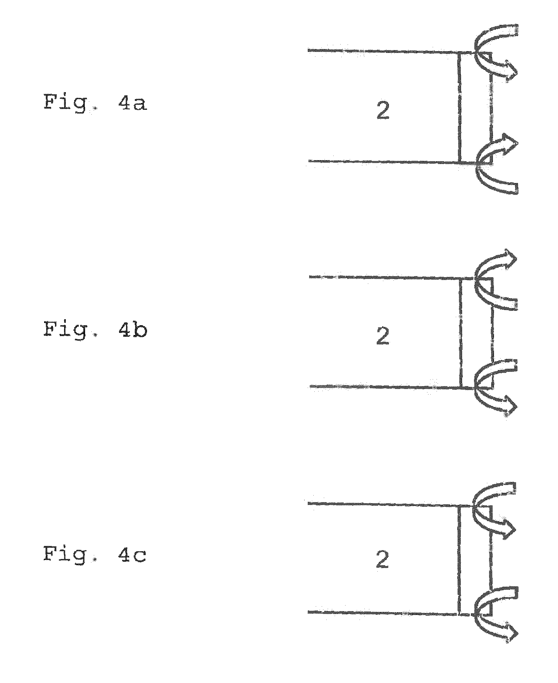

Figuren 4a bis 4c zeigen unterschiedliche Betriebsmodi des Anfasfräsers oder der Anfasfräser der erfindungsgemäßen Vorrichtung 1.

In Figur 4a ist dabei mittels Pfeilen eine Anordnung zweier Anfasfräser gezeigt, bei der ein Drehrichtungswechsel der Anfasfräser stattfindet. Hierbei können zwei identische Fräser gleichzeitig verwendet werden, wobei diese um 180° versetzt angeordnet sind. Mikrograte am Werkstück 2 können in den Flanken entstehen, nicht jedoch an den Stirnkanten, so dass eine saubere Stirnkante nach dem Anfasen gegeben ist. Die an den Flanken entstandenen Mikrograte können anschließend mit einer Grobentgratscheibe entfernt werden.

In Figur 4b ist mittels Pfeilen eine Anfasfräseranordnung gezeigt, bei der gleichfalls ein Drehrichtungswechsel des Anfasfräsers stattfindet, wobei allerding ein einzelner Fräser verwendet werden kann. Mikrograte können hierbei am Werkstück 2 an den Stirnkanten, nicht jedoch in den Flanken entstehen. Diese Mikrograte können aufgrund ihrer geringen Größenausbildung bei einer anschließenden Wärmebehandlung des Werkstücks 2 zerstört werden.

Figur 4c zeigt eine ähnliche Anordnung der Anfasfräser, wie sie in Figur 4a gezeigt ist, in der dagegen kein Drehrichtungswechsel einer Werkzeugspindel 6 und/oder Tisch erforderlich ist Hierbei werden jedoch die bei der Bearbeitung des Werkstücks 2 in den Flanken entstehenden Mikrograte anschließenden mit einer Grobentgratscheibe abgenommen.

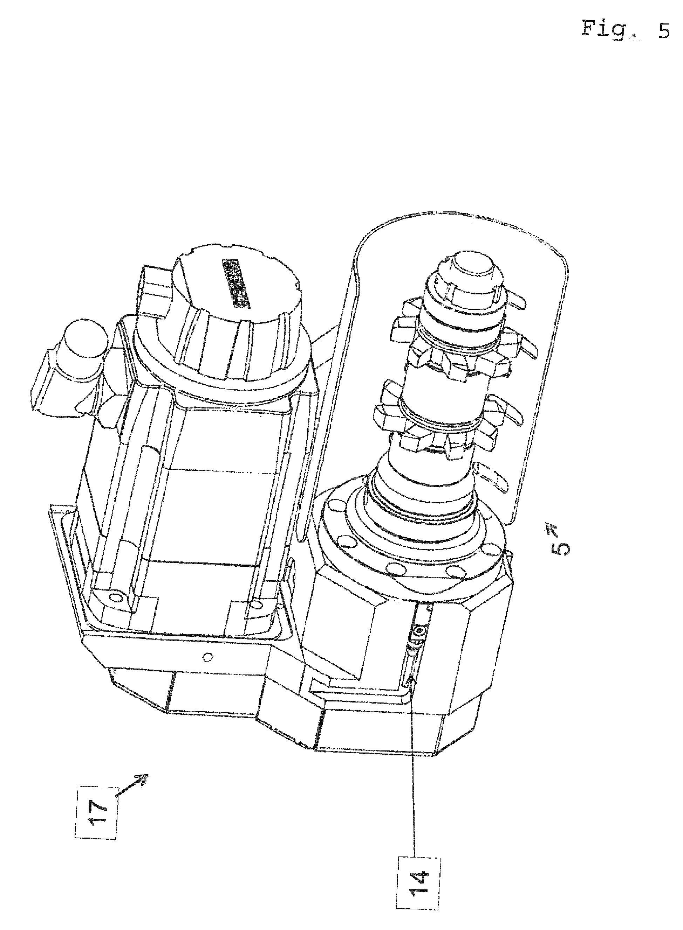

Figur 5 zeigt einen Detailausschnitt eines Ausführungsbeispiel der Vorrichtung 1 mit einem Einfädelsensor 14 als Vorrichtung zum Einfädeln des Anfasfräsers und/oder zum Einmitten des Anfasfräsers relativ zur Lage der Verzahnung auf dem Werkstück. Der Einfädelsensor 14 ist dabei im Bearbeitungskopf 17 im Bereich des Chamfer-Cut-Fräsers 5 vorgesehen.

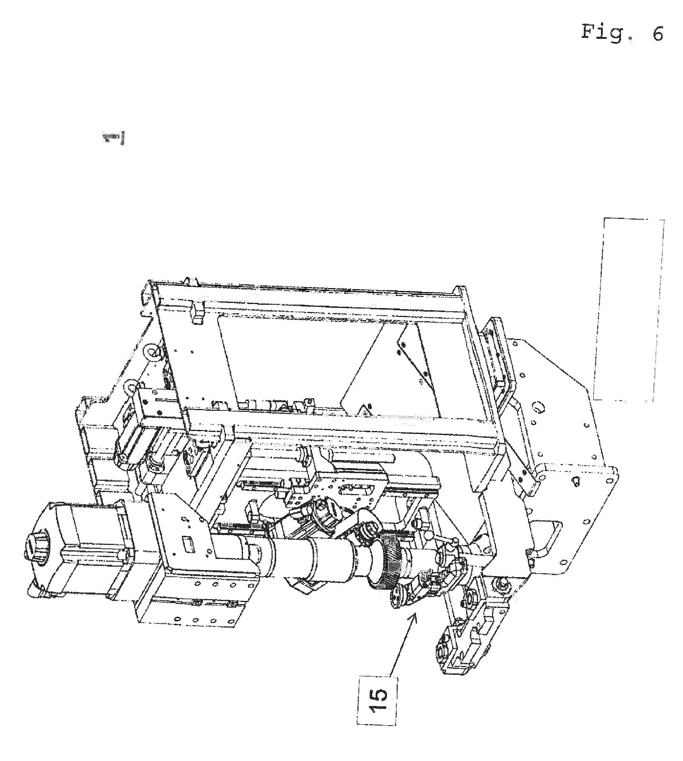

In der in Figur 6 gezeigten Ausführungsform umfasst die Vorrichtung 1 zusätzlich eine Grobentgratscheibe 15. Die Grobentgratscheibe 15 ist dabei zum Entfernen von Grobgraten ausgelegt, weiche durch das Fräsverfahren entstehen.

## Patentansprüche

1. Vorrichtung (1) zum Anfasen eines verzahnten Werkstücks (2) mit wenigstens einer drehbar gelagerten Werkstückspindel (3) und mit wenigstens einer Bearbeitungseinheit (4) mit mindestens einem Bearbeitungskopf (17) zum Anfasen eines in einer Spindel (6) eingespannten Werkstücks (2),
**dadurch gekennzeichnet,**
**dass** die Bearbeitungseinheit (4) mit mindestens einem Bearbeitungskopf (17) ausschließlich Anfasfräser, die ein Bearbeiten des Werkstücks (2) an zwei unterschiedlichen Seiten des Werkstücks (2) zulassen, insbesondere Chamfer-Cut-Fräser (5, 5'), umfasst und dass die Bearbeitungseinheit (4) mit mindestens einem Bearbeitungskopf (17) eine Vorrichtung zum Einfädeln von Anfasfräsern und/oder zum Einmitten von Anfasfräsern relativ zur Lage der Verzahnung auf dem Werkstück (2) umfasst.

2. Vorrichtung (1) nach Anspruch 1, **dadurch gekennzeichnet, dass** die Bearbeitungseinheit (4) mit mindestens einem Bearbeitungskopf (17) wenigstens zwei separat ansteuerbare Anfasfräser, insbesondere Chamfer-Cut-Fräser (5, 5') umfasst, wobei vorzugsweise getrennte Antriebe, insbesondere gesondert ansteuerbare Antriebe, vorgesehen sind.

3. Vorrichtung (1) nach Anspruch 1 oder 2, **dadurch gekennzeichnet, dass** die Vorrichtung (1) hängend angeordnet ist.

4. Vorrichtung (1) nach einem der Ansprüche 1 bis 3, **dadurch gekennzeichnet, dass** die Vorrichtung (1) innerhalb einer Verzahnmaschine angeordnet ist.

5. Vorrichtung (1) nach einem der Ansprüche 1 bis 4, **dadurch gekennzeichnet, dass** die Vorrichtung (1) als eigenständige Anfasmaschine ausgebildet ist.

6. Vorrichtung (1) nach einem der Ansprüche 1 bis 5, **dadurch gekennzeichnet, dass** die Vorrichtung (1) über eine Transportvorrichtung mit einer nebenstehenden Verzahnmaschine gekoppelt ist

7. Vorrichtung (1) nach einem der Ansprüche 1 bis 6, **dadurch gekennzeichnet, dass** die Vorrichtung (1) innerhalb eines verzahnten Werkstückes zum Anfasen von Innenverzahnungen angeordnet ist, und/oder dass die Vorrichtung (1) einen automatischen Werkzeugwechsler umfasst.

8. Verfahren zum Anfasen eines Werkstücks (2) mittels einer Vorrichtung (1) nach einem der Ansprüche 1 bis 7.

9. Verfahren nach Anspruch 8, **dadurch gekennzeichnet, dass** das Anfasen zwischen mindestens zwei Frässchnitten und/oder zwischen mindestens einem Schruppschnitt und mindestens einem Schlichtschnitt durchgeführt wird.
